# Europäisches Patentamt

# European Patent Office

# Office européen des brevets

(19)

(11) Veröffentlichungsnummer: **0 258 851**
**B1**

(12)

# EUROPÄISCHE PATENTSCHRIFT

(45) Veröffentlichungstag der Patentschrift:
**11.07.90**

(51) Int. Cl.⁵: **F16F 13/00**

(21) Anmeldenummer: **87112605.8**

(22) Anmeldetag: **29.08.87**

(54) **Lager mit hydraulischer Dämpfung.**

(30) Priorität: **02.09.86 DE 3629860**

(43) Veröffentlichungstag der Anmeldung:
**09.03.88 Patentblatt 88/10**

(45) Bekanntmachung des Hinweises auf die Patenterteilung:
**11.07.90 Patentblatt 90/28**

(84) Benannte Vertragsstaaten:
**DE ES FR GB IT SE**

(56) Entgegenhaltungen:
DE-A- 3 244 295

PATENT ABSTRACTS OF JAPAN Band 10, Nr. 105,
(M-471)(2162) 19. April 1986; &
JP-A-60 237 237 (HONDAGIKEN KOGYO) 26-11-1985

(73) Patentinhaber: **METZELER Gesellschaft mit
beschränkter Haftung, Gneisenaustrasse 15,
D-8000 München 50(DE)**

(72) Erfinder: **Sprang, Rüdiger, Pappelweg 10, D-5205 St.
Augustin 1(DE)**
Erfinder: **Waldecker, Ralf, Augustastrasse 10,
D-5450 Neuwied 1(DE)**

(74) Vertreter: **Michelis, Theodor, Dipl.-Ing.,
Gneisenaustrasse 15, D-8000 München 50(DE)**

ACTORUM AG

## Beschreibung

Die Erfindung bezieht sich auf ein Lager mit hydraulischer Dämpfung, insbesondere für Kraftfahrzeugmotoren, dessen Arbeitskammer von einer Wandung aus elastomerem Material mit einer stirnseitigen Lagerplatte für den abzustützenden Motor begrenzt ist, und bei dem die Lagerplatte auf ihrer der Arbeitskammer zugewandten Innenseite eine Ausnehmung als Luftspeicherkammer aufweist, die gegen die Arbeitskammer mit einem Drosselelement mit einer zentralen Drosselöffnung abgeschlossen ist.

Ein derartiges Lager ist aus der JP-A 60 237 237 bekannt. Derartige Lager müssen mit einer inkompressiblen Flüssigkeit gefüllt sein, wobei innerhalb des Lagers keine Luftblasen oder sonstige Gaseinschlüsse verbleiben dürfen, da durch die Kompressibilität derartiger Einschlüsse die charakteristischen Dämpfungswerte eines solchen Lagers verfälscht werden können. Bei dem bekannten Lager ist in der Lagerplatte eine Luftspeicherkammer eingelassen, in die über eine Öffnung evtl. entstehende Luftblasen aufsteigen können. Bei einer derartigen Ausgestaltung ist jedoch einerseits nicht ganz sichergestellt, ob die Luftblasen tatsächlich den Weg zur Drosselöffnung finden, oder nicht auf der ebenen Unterfläche der Lagerplatte hängenbleiben und andererseits, ob diese Luftblasen dann auch tatsächlich in die Luftkammer aufsteigen.

Der vorliegenden Erfindung liegt daher die Aufgabe zugrunde, ein derartiges Lager so weiterzubilden, daß ein Aufsteigen derartiger Luftblasen in die Luftspeicherkammer unter allen Betriebszuständen sicher gewährleistet ist.

Zur Lösung dieser Aufgabe ist erfindungsgemäß vorgesehen, daß das Drosselelement eine konisch zur Luftspeicherkammer hin zulaufende Drosselplatte mit mindestens einer weiteren Öffnung im Bereich ihres äußeren Umfanges aufweist.

Durch die konische Gestaltung der Drosselplatte kann sich die Luft direkt unterhalb dieser Drosselplatte sammeln und über die den höchsten Punkt dieser Drosselplatte bildenden Drosselöffnung in die Luftspeicherkammer ausströmen. Durch die zusätzliche Anordnung mindestens einer weiteren Öffnung am äußeren Umfang der Drosselplatte ist darüber hinaus sichergestellt, daß für den erforderlichen Volumenausgleich die zunächst in der Luftspeicherkammer vorhandene Flüssigkeit in die Arbeitskammer des Lagers zurückströmen kann.

Zweckmäßig ist es, wenn die Drosselplatte am Umfang einen hohlzylindrischen Ansatz mit einem flachen, radialen Rand aufweist, so daß sie damit in die Luftkammer eingeschoben und dort klemmend gehalten werden kann. Zweckmäßigerweise ist deswegen auch die Luftspeicherkammer mit dem Elastomermaterial des Lagers ausgekleidet.

Anhand einer schematischen Zeichnung sind Aufbau und Wirkungsweise eines Ausführungsbeispiels nach der Erfindung näher erläutert. Dabei zeigen

Fig. 1 einen Querschnitt durch ein Zweikammer-Motorlager kurz nach dem Befüllen,

Fig. 2 einen Ausschnitt eines derartigen Lagers im Bereich des Drosselelementes,

Fig. 3 einen entsprechenden Ausschnitt nach Übertritt der Luft in die Luftspeicherkammer,

Fig. 4 einen Schnitt durch eine Drosselöffnung und

Fig. 5 eine weitere Variante einer Drosselöffnung.

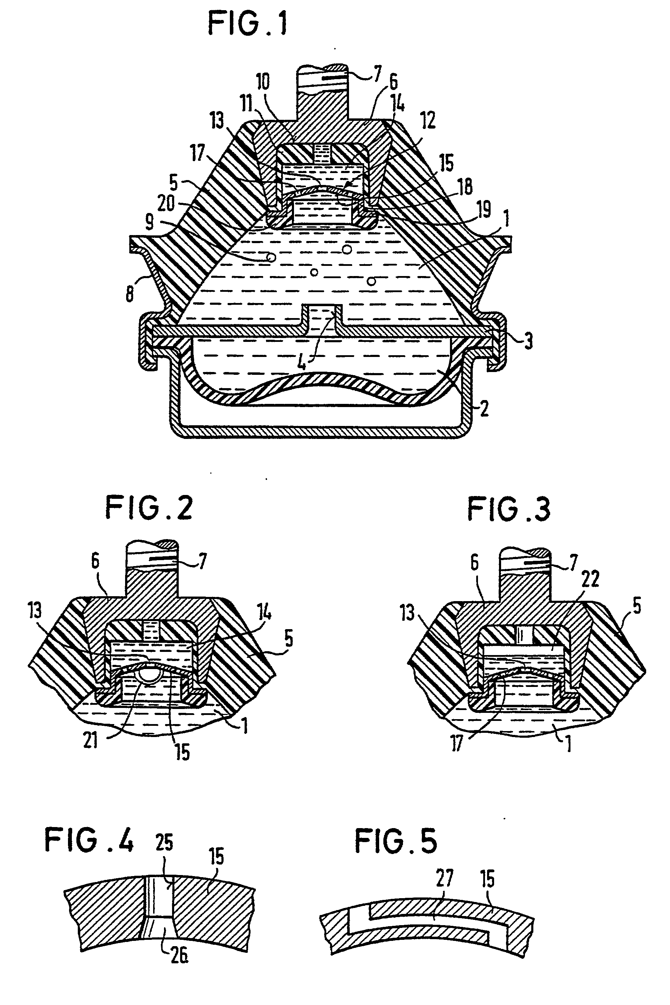

Wie aus Fig. 1 ersichtlich ist, die den schematischen Aufbau eines Zweikammer-Motorlagers zeigt, besteht dieses Lager im wesentlichen aus einer oberen, motorseitigen Arbeitskammer 1 und einer unteren Ausgleichskammer 2, die mit einer hydraulischen Flüssigkeit gefüllt und durch eine Drosselöffnung 4 in einer Zwischenplatte 3 miteinander in Verbindung stehen. Die Arbeitskammer 1 wird dabei von einer starkwandigen, hohlkegelförmigen Kammerwandung 5 aus gummielastischem Material begrenzt, die an der oberen Stirnseite von der Motorlagerplatte 6 mit einem aufgesetzten Gewindebolzen 7 zum Anschluß an den abzustützenden, nicht näher dargestellten Motor abgeschlossen und am unteren Außenumfang mit dem ringförmigen Widerlager 8 haftend verbunden ist.

Beim Befüllen eines derartigen Motorlagers, das entweder nachträglich nach dem Zusammenbau der Einzelteile oder während der Montage erfolgen kann, ist es praktisch nicht zu vermeiden, daß innerhalb der Flüssigkeit Luftblasen 9 eingeschlossen sind, die im Gegensatz zu der Flüssigkeit kompressibel sind und daher das Dämpfungsverhalten des Lagers beeinflussen können.

Um die negativen Einflüsse dieser Luftblasen zu unterdrücken, ist erfindungsgemäß in die obere Lagerplatte 6 auf ihrer der Arbeitskammer 1 zugewandten Innenseite eine Ausnehmung 10 eingelassen, die ebenfalls mit elastomerem Material 11 ausgekleidet sein kann. Von unten ist in diese Luftspeicherkammer 14 ein Drosselelement 12 mit einer zentralen Drosselöffnung 13 eingesetzt, durch die die Luftblasen 9 in die Luftspeicherkammer 14 übertreten können.

Das Drosselelement 12 weist eine nach oben konisch zulaufende Platte 15 mit einer zentralen Bohrung 13 und weiteren Ausgleichsbohrungen 17 am äußeren Umfang auf und trägt bei dem dargestellten Ausführungsbeispiel einen hohlzylindrischen Ansatz 18 mit einem flachen, radialen Rand 19, der ebenfalls mit Gummi 20 beschichtet sein kann. Dieses Drosselelement 12 kann dann in die zylindrische Ausnehmung 10 eingeschoben werden und wird durch die elastische Auskleidung 11 dort klemmend und dicht gehalten.

Nach einer gewissen Ruhezeit nach dem Befüllen das Lagers werden sich - wie das in Fig. 2 gezeigt ist - die kleineren Luftblasen 9 als größere Luftblase 21 unter der konisch zulaufenden Drosselplatte 15 sammeln und von dort in die Luftspeicherkammer 14 strömen, so daß sich dort dann - wie aus Fig. 3 zu ersehen ist - ein Luftvolumen 22 ansammelt. In der Kammer 14 vorhandene Flüssigkeit wird über die Ausgleichsbohrungen 17 in die Arbeitskammer 1 zurückströmen.

Es ist dabei einmal wesentlich, daß die Luftspeicherkammer 11 ausreichend dimensioniert ist, so daß oberhalb der Drosselbohrung 13 stets eine genügend große Flüssigkeitsmenge verbleibt, um ein Rücksaugen von Luft in die Arbeitskammer 1 des Lagers zu vermeiden.

Darüber hinaus ist die Dimensionierung der Drosselöffnung 13 so zu wählen, daß sie einen erheblich größeren Strömungsverlust als die Düse 4 aufweist. Das bewirkt, daß diese Öffnung bereits vor dem Arbeitsbereich der Düse 4 zwischen den beiden Kammern 1 und 2 hydraulisch geschlossen ist und über den gesamten Frequenzbereich geschlossen bleibt, so daß nahezu kein Flüssigkeitsaustausch zwischen Luftspeicherkammer 14 und Arbeitskammer 1 erfolgt.

Die Drosselöffnung 13 kann - wie aus Fig. 4 zu ersehen ist - als einfache Bohrung 25 mit einem konisch verbreiterten Einlauf 26 oder aber gemäß Fig. 5 als abgeknickter Kanal 27 ausgebildet sein, um damit einem Rückströmen der Flüssigkeit oder einem Rücksaugen der eingeschlossenen Luft einen größeren Widerstand entgegenzusetzen. Aber auch andere Drosselgeometrien sind möglich.

Wirkung und Aufbau des Drosselelementes sind vorstehend am Beispiel eines Zweikammer-Motorlager dargestellt. Darauf ist jedoch die Anwendung nicht beschränkt, vielmehr ist sie in gleicher Weise bei anderen hydraulisch gedämpften Systemen, wie z.B. Einkammerlagern, Getriebe-, Differential- oder Fahrerhauslagern sowie Stoßdämpfern möglich, d.h. bei Systemen, bei denen in der Hydraulikflüssigkeit eingeschlossene Luftblasen sich nicht negativ auf das Dämpfungsverhalten auswirken dürfen.

## Patentansprüche

1. Lager mit hydraulischer Dämpfung, insbesondere für Kraftfahrzeug-Motoren, dessen Arbeitskammer (1) von einer Wandung (5) aus elastomerem Material und einer stirnseitigen Lagerplatte (6) für den abstützenden Motor begrenzt ist, und bei dem die Lagerplatte (6) auf ihrer der Arbeitskammer (1) zugewandten Innenseite eine Ausnehmung (10) als Luftspeicherkammer (14) aufweist, die gegen die Arbeitskammer (1) mit einem Drosselelement (12) mit einer zentralen Drosselöffnung (13) abgeschlossen ist, dadurch gekennzeichnet, daß das Drosselelement (12) eine konisch zur Luftspeicherkammer (14) hin zulaufende Drosselplatte (15) mit mindestens einer weiteren Öffnung (17) im Bereich ihres äußeren Umfanges aufweist.

2. Lager nach Anspruch 1, dadurch gekennzeichnet, daß die Drosselplatte (15) am äußeren Umfang einen hohlzylindrischen Ansatz (18) mit einem flachen, radialen Rand (19) aufweist.

3. Lager nach Anspruch 1, dadurch gekennzeichnet, daß die Ausnehmung (10) mit Elastomermaterial (113) ausgekleidet ist.

4. Lager nach Anspruch 2 und 3, dadurch gekennzeichnet, daß die Drosselplatte (12) mit ihrem Ansatz (18, 19) in die Luftspeicherkammer (14) eingeschoben und dort klemmend gehalten ist.

## Claims

1. Bearing with hydraulic damping, in particular for motor vehicle engines, whose working chamber (1) is defined by a wall (5) made of elastomer material having a front bearing plate (6) for the engine to be supported, and in which the bearing plate (6) has on its inner side facing the working chamber (1) a recess (10) as an air-storage chamber (14) which is sealed off from the working chamber (1) by a throttle element (12) having a central throttle opening (13), characterised in that the throttle element (12) has a throttle plate (15) which tapers conically towards the air-storage chamber (14) and has at least one further opening (17) in the region of its outer periphery.

2. Bearing according to claim 1, characterised in that the throttle plate (15) has on its outer periphery a hollow cylindrical shoulder (18) with a flat radial edge (19).

3. Bearing according to claim 1, characterised in that the recess (10) is lined with elastomer material (11).

4. Bearing according to claims 2 and 3, characterised in that the throttle plate (12) is pushed with its shoulder (18, 19) into the airstorage chamber (14) and is held there in a clamped manner.

## Revendications

1. Support à amortissement hydraulique, notamment pour moteurs de véhicules automobiles, dont la chambre de travail (1) est délimitée par une paroi (5) en matériau élastomère et par une plaque-support (6) du côté frontal pour le moteur à supporter et dans lequel la plaque-support (6) comporte sur son côté intérieur, tourné vers la chambre de travail (1), un évidement (10), servant de chambre formant réservoir d'air (14), qui est fermé par rapport à la chambre de travail (1) par un élément d'étranglement (12) à orifice d'étranglement (13) central, caractérisé en ce que l'élément d'étranglement (12) comporte une plaque d'étranglement (15), s'étendant coniquement vers la chambre formant réservoir d'air (14) et ayant au moins un autre orifice (17) dans la région de sa périphérie extérieure.

2. Support suivant la revendication 1, caractérisé en ce que la plaque d'étranglement (15) comporte sur sa périphérie extérieure un prolongement (18) cylindrique creux, ayant un bord (19) radial plat.

3. Support suivant la revendication 1, caractérisé en ce que l'évidement (10) est revêtu d'une matière élastomère (11).

4. Support suivant la revendication 2 ou 3, caractérisé en ce que la plaque d'étranglement (12) est introduite par son prolongement (18, 19) dans la chambre formant réservoir d'air (14) et y est maintenue par coincement.

# FIG.1

# FIG.2

# FIG.3

# FIG.4

# FIG.5